# FASCICULE DE BREVET EUROPEEN

(11) **EP 4 326 979 B1**
(45) Date de publication et mention de la délivrance du brevet: **04.06.2025**
(21) Numéro de dépôt: 22722298.1
(22) Date de dépôt: 11.04.2022
(51) Int. Cl.: F02K 1/76

(54) **DISPOSITIF D'INVERSION DE POUSSÉE POUR NACELLE DE TURBORÉACTEUR D'AÉRONEF**
SCHUBUMKEHRVORRICHTUNG FÜR EINE FLUGZEUGMOTORGONDEL
THRUST REVERSER FOR AN AIRCRAFT TURBOJET ENGINE NACELLE

(30) Priorité: 20.04.2021 FR 2104072
(43) Date de publication de la demande: 28.02.2024
(73) Titulaire: Safran Landing Systems, 78140 Vélizy-Villacoublay (FR)
(72) Inventeur: KAMIS, Jean-Baptiste, 77550 MOISSY-CRAMAYEL (FR)
(74) Mandataire: Gevers & Orès
(86) Numéro de dépôt international: PCT/FR2022/050686
(87) Numéro de publication internationale: WO 2022/223904

(56) Documents cités:
- FR-A1- 2 889 266
- US-A1- 2013 087 411
- US-B1- 6 922 992
- US-B2- 9 266 420
- US-B2- 9 494 173

## Description

### DOMAINE TECHNIQUE

La présente invention se rapporte à un système d'actionnement électro-hydrostatique pour dispositif d'inversion de poussée pour nacelle de turboréacteur d'aéronef, à un dispositif d'inversion de poussée équipé d'un tel système d'actionnement électro-hydrostatique et à un aéronef comprenant un tel dispositif d'inversion de poussée.

### TECHNIQUE ANTÉRIEURE

L'arrière-plan technique comprend notamment les documents US 9494173 B2, US 2013/0087411 A1, US 9266420 B2, US 6922992 B1 et FR 2889266 A1.

Un aéronef est propulsé par un ou plusieurs turboréacteurs logés chacun dans une nacelle abritant un ensemble de dispositifs d'actionnement annexes liés à son fonctionnement et assurant diverses fonctions lorsque le turboréacteur est en fonctionnement ou à l'arrêt.

Ces dispositifs d'actionnement annexes comprennent notamment un système mécanique d'inversion de poussée.

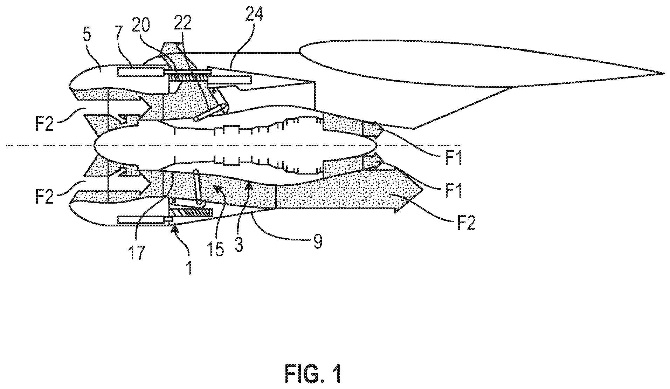

On se réfère à la figure 1 illustrant un exemple de nacelle de turboréacteur selon l'art antérieur. Une telle nacelle 1 logeant un turboréacteur 3 présente généralement une structure sensiblement tubulaire comprenant une section amont 5 définissant une entrée d'air, une section médiane 7 destinée à entourer une soufflante dudit turboréacteur, une section aval 9 destinée à entourer la chambre de combustion du turboréacteur et intégrant éventuellement des moyens d'inversion de poussée, et est généralement terminée par une tuyère d'éjection dont la sortie est située en aval du turboréacteur. Chaque ensemble propulsif est rattaché à l'avion par un pylône, non représenté, situé généralement sous une aile ou au niveau du fuselage.

Dans la présente demande, l'amont et l'aval sont définis par rapport au sens d'écoulement de l'air dans l'ensemble propulsif en fonctionnement jet direct, l'entrée d'air étant située en amont par rapport à la tuyère d'éjection, située en aval de la nacelle.

Les nacelles modernes sont destinées à abriter un turboréacteur double flux apte à générer par l'intermédiaire du générateur de gaz un flux d'air chaud F1, appelé flux primaire, et par l'intermédiaire des pales de la soufflante en rotation un flux d'air froid F2, appelé flux secondaire, qui circule à l'extérieur du turboréacteur 3 à travers un canal annulaire définissant une veine de circulation du flux d'air secondaire 15. La veine 15 est délimitée entre un carénage interne 17 du turboréacteur et une paroi interne de la nacelle. Les deux flux d'air F1 et F2 sont éjectés du turboréacteur 3 par l'arrière de la nacelle via cette veine de circulation d'air.

Le rôle d'un inverseur de poussée est, lors de l'atterrissage d'un aéronef, d'améliorer la capacité de freinage de celui-ci en redirigeant vers l'avant au moins une partie de l'air éjecté du turboréacteur. Dans cette phase, l'inverseur obstrue au moins une partie de la veine de circulation d'air et dirige ce flux vers l'avant de la nacelle, générant de ce fait une contre-poussée qui vient s'ajouter au freinage des roues de l'avion.

Les moyens mis en œuvre pour réaliser cette réorientation du flux varient suivant le type d'inverseur. Cependant, de manière générale, la structure d'un inverseur comprend au moins un capot d'inverseur mobile déplaçable entre, d'une part, une position déployée ou position de jet inversé dans laquelle il ouvre dans la nacelle un passage destiné au flux d'air dévié, et d'autre part, une position d'escamotage ou position de jet direct dans laquelle il ferme ce passage.

Dans les dispositifs d'inversion de poussée à portes, chaque capot mobile pivote de manière à venir bloquer le flux et le dévier et est donc actif dans cette réorientation.

Dans le cas d'un inverseur à grilles de déviation, tel que celui qui équipe la nacelle représentée sur la figure 1, la réorientation du flux d'air en position de jet inversé est effectuée par des grilles de déviation 20, associées à des volets d'inversion 22 venant bloquer au moins partiellement la veine de circulation d'air. Le capot mobile 24 (couramment appelé « transcowl » dans la terminologie anglo-saxonne) coulisse de manière à ce qu'en reculant lors de la phase d'ouverture, ils découvrent des grilles d'aubes de déviation disposées dans l'épaisseur de la nacelle. Un système de bielles relie ce capot mobile aux volets d'inversion ou portes de blocage qui se déploient à l'intérieur du canal d'éjection et bloquent la sortie en flux direct.

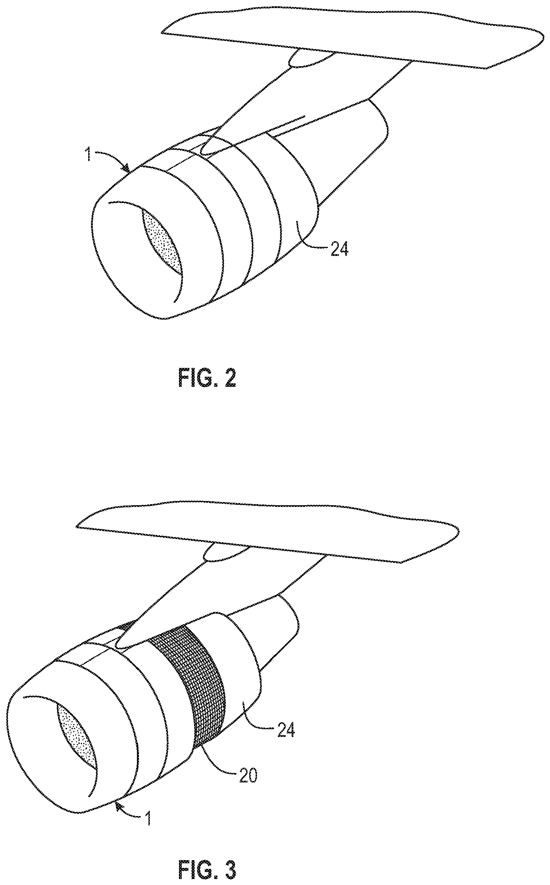

La figure 2 et la partie basse de la figure 1 illustrent une nacelle équipée d'un inverseur à grille dans la position escamotée tandis que la figure 3 et la partie haute de la figure 1 illustrent la même nacelle dans la position déployée, un ou plusieurs éléments formant capot 24 étant déplacés par coulissement le long de rails vers l'aval afin de découvrir les grilles de déviation 20 qui défléchissent le flux d'air secondaire (flux froid) du moteur vers l'amont de la nacelle.

Classiquement, l'actionnement de ces éléments formant capot d'inverseur est effectué au moyen d'une pluralité d'actionneurs mécaniques (typiquement du type à vis à billes) ou hydrauliques (du type à pistons) répartis à la périphérie de la nacelle, commandés par un circuit à génération hydraulique connecté au circuit général hydraulique de l'aéronef, ou bien par un circuit à génération électrique connecté au circuit général électrique de l'aéronef.

Par génération hydraulique, on entend que la source d'énergie est hydraulique, la commande des actionneurs pouvant quant à elle être hydraulique (actionneur hydraulique) ou mécanique (moteur hydraulique agissant sur actionneur mécanique). De même, par génération électrique, on entend que la source d'énergie est électrique, la commande des actionneurs pouvant quant à elle être mécanique (moteur électrique agissant sur un actionneur mécanique) ou hydraulique (moteur électrique agissant sur un moteur hydraulique par l'intermédiaire d'une pompe hydraulique).

Comme cela est connu en soi, ces actionneurs sont reliés cinématiquement entre eux, typiquement par des arbres souples (couramment appelés « flexshafts » dans la terminologie anglo-saxone) dans le cas d'actionneurs mécaniques, de manière que la commande de l'un deux entraîne également la commande des autres.

Le document de l'état de la technique FR 2 947 870 décrit un système d'actionnement pour élément mobile de nacelle de moteur d'aéronef, tel qu'un capot d'inverseur de poussée, permettant de pallier une défaillance du circuit à génération hydraulique ou électrique des actionneurs, de manière que la fonction remplie par l'élément actionné ne soit pas affectée.

Un système d'actionnement d'un inverseur de poussée comporte par exemples des actionneurs hydrauliques linéaires ayant un mécanisme de verrouillage interne, un mécanisme de verrouillage externe, une unité de commande hydraulique notée HCU contenant des fonctions d'isolement et de vanne de commande directionnelle, un mécanisme de synchronisation par l'intermédiaire notamment des arbres souples de synchronisation, des entraînements manuels à des fins de maintenance et des éléments de plomberie associée jusqu'aux interfaces des pylônes.

Afin d'obtenir un mouvement correct du ou des éléments mobiles formant capot, tous les actionneurs doivent être synchronisés afin d'éviter notamment une surcharge sur la structure de la nacelle. Cette synchronisation se fait notamment grâce à l'arbre souple de forme sensiblement circulaire reliant les actionneurs entre eux et qui longe la paroi interne de la nacelle.

Pour la plupart des systèmes hydrauliques d'inverseurs de poussée, la précision de synchronisation requise entre tous les actionneurs est d'environ 3 mm.

La présente invention a notamment pour but de proposer un système d'actionnement pour dispositif d'inversion de poussée plus facile à installer que le système de l'état de la technique notamment en s'affranchissant du système de synchronisation mécanique, comportant des engrenages et des joints, qui est par conséquent lourd et compliqué, tout en respectant les exigences de sécurité et de performances du domaine aéronautique.

### RÉSUMÉ DE L'INVENTION

À cet effet, l'invention concerne un dispositif d'inversion de poussée pour nacelle de turboréacteur d'aéronef comportant au moins un capot mobile entre une position escamotée et une position déployée par rapport à la nacelle et un système d'actionnement électro-hydrostatique, le système électro-hydrostatique comprenant une motopompe, et un premier ensemble d'actionnement formé de :
- une série d'au moins deux actionneurs destinés à être fixés à un capot mobile du dispositif d'inversion de poussée et configurés pour déplacer le ou les capots mobiles entre une position escamotée et une position déployée par rapport à la nacelle ; et
- un diviseur de débit volumétrique ayant une entrée raccordée à la motopompe et au moins deux sorties, chacune raccordée à un actionneur, le diviseur de débit volumétrique étant configuré pour recevoir un fluide et pour fournir de manière sensiblement équitable en débit le fluide aux actionneurs.

L'invention permet de remplacer le dispositif de synchronisation mécanique comportant un arbre de synchronisation reliant tous les actionneurs par un système d'actionnement électro-hydrostatique (EHA) comportant au moins un diviseur de débit volumétrique afin d'assurer la synchronisation des actionneurs et donc le déplacement du capot mobile. Ce système permet avantageusement de simplifier l'installation du système d'actionnement électro-hydrostatique pour dispositif d'inversion de poussée tout en respectant les exigences de sécurité et de performances du domaine aéronautique.

En effet, les diviseurs de débit volumétrique permettent de diviser le flux de fluide de manière égale quelle que soit la pression d'entrée et ce de manière très précise. Ils ont l'avantage de ne pas être affectés par les charges sur le capot du dispositif d'inversion et sont très précis.

Un tel système d'actionnement électro-hydrostatique (EHA) permet de fournir un débit et une pression juste nécessaires aux actionneurs lorsque les charges antagonistes sont présentes et peut fonctionner instantanément comme un générateur électrique lorsque les actionneurs font face à des charges auxiliaires permettant d'améliorer la gestion de puissance électrique du système.

Avantageusement, la motopompe est commandée par une unité d'entraînement du moteur qui transformera le bus d'alimentation électrique de l'aéronef en un bus triphasé pour la commande du moteur.

En outre, un tel système d'actionnement électro-hydrostatique selon l'invention a pour avantage d'être totalement indépendant du circuit hydraulique de l'aéronef. Ainsi, en termes d'installation, l'ensemble motopompe peut être avantageusement installé dans le pylône avec le bloc hydraulique. Ce bloc sera plus petit que l'actuel car aucun mode commun ne se produira, contrairement aux systèmes existants de l'art antérieur.

De plus, l'arbre de synchronisation des systèmes actuels est supprimé permettant ainsi l'utilisation d'actionneurs plus simples et moins coûteux. Les diviseurs de flux pourront être placés dans la nacelle grâce à leurs faibles dimensions.

Avantageusement, le système d'actionnement électro-hydrostatique comporte un deuxième ensemble d'actionnement identique au premier ensemble d'actionnement et un diviseur principal de débit volumétrique raccordant la motopompe à chacun des premier et deuxième ensemble d'actionnement. Le diviseur principal de débit volumétrique est alors configuré pour fournir équitablement aux premier et deuxième ensembles d'actionnement le fluide reçu de la motopompe.

Dans ce cas, les diviseurs de flux des premier et deuxième ensembles d'actionnement seront placés avantageusement dans la nacelle de façon à équilibrer les pertes de charge de pression dans les conduites entre le diviseur principal de débit volumétrique et les actionneurs qui leur sont raccordés.

Le dispositif d'inversion de poussée selon l'invention peut comprendre une ou plusieurs des caractéristiques suivantes
- chaque ensemble d'actionnement comporte une paire d'actionneurs et est configuré pour déplacer respectivement un premier et un deuxième capots mobiles du dispositif d'inversion de poussée, les actionneurs d'une même paire d'actionneurs étant destinés à être fixés à des extrémités opposées d'un même capot mobile ;
- chaque ensemble d'actionnement comporte un triplet d'actionneurs et est configuré pour déplacer respectivement un premier et un deuxième capots mobiles du dispositif d'inversion de poussée, les actionneurs d'un même triplet d'actionneurs étant destinés à être régulièrement fixés entre deux extrémités opposées d'un même capot mobile ;
- le ou les diviseurs de débit volumétrique des ensembles d'actionnement et le diviseur principal de débit volumétrique sont de type à engrenages ;
- chaque diviseur de débit volumétrique d'un ensemble d'actionnement comporte un limiteur de pression interne ;
- la motopompe comporte un moteur électrique synchrone à aimants permanents associé à une pompe à cylindrée fixe bidirectionnelle à pistons axiaux ;
- le système d'actionnement électro-hydrostatique comporte un dispositif de sécurité agencé entre la motopompe et le diviseur de débit volumétrique du premier ensemble d'actionnement, le dispositif de sécurité étant configuré pour empêcher une activation du diviseur de débit volumétrique en dehors de la phase d'atterrissage de l'aéronef, le dispositif de sécurité comportant une vanne d'isolement et une vanne de commande ;
- le dispositif de sécurité est agencé entre la motopompe et le diviseur principal de débit volumétrique, le dispositif de sécurité étant configuré pour empêcher une activation du diviseur principal de débit volumétrique en dehors de la phase d'atterrissage de l'aéronef ;
- les actionneurs sont des actionneurs télescopiques ;
- le système d'actionnement électro-hydrostatique comporte des conduites raccordant chacune un actionneur à un diviseur de débit volumétrique et un fusible hydraulique agencé sur chaque conduite.
Le dispositif d'inversion de poussée est un dispositif d'inversion de poussée à grilles ou un dispositif d'inversion de poussée à portes.

L'invention concerne également un aéronef comportant un tel dispositif d'inversion de poussée.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1, déjà décrite, illustre une vue en coupe longitudinale d'une nacelle équipé d'un dispositif d'inversion de poussée à grilles selon l'art antérieur ;
- la figure 2, déjà décrite, représente une vue tridimensionnelle de la nacelle de la figure 1 munie d'un capot d'inverseur de poussée dans une position de jet direct ;
- la figure 3, déjà décrite, représente la nacelle de la figure 2 sur laquelle le capot d'inverseur de poussée est dans une position de jet inversé ;
- la figure 4 représente schématiquement un circuit de commande d'un premier mode de réalisation d'un système d'actionnement électro-hydrostatique selon l'invention,
- la figure 5 illustre schématiquement un deuxième mode de réalisation d'un système d'actionnement électro-hydrostatique selon l'invention, et
- la figure 6 illustre schématiquement un troisième mode de réalisation d'un système d'actionnement électro-hydrostatique selon l'invention,

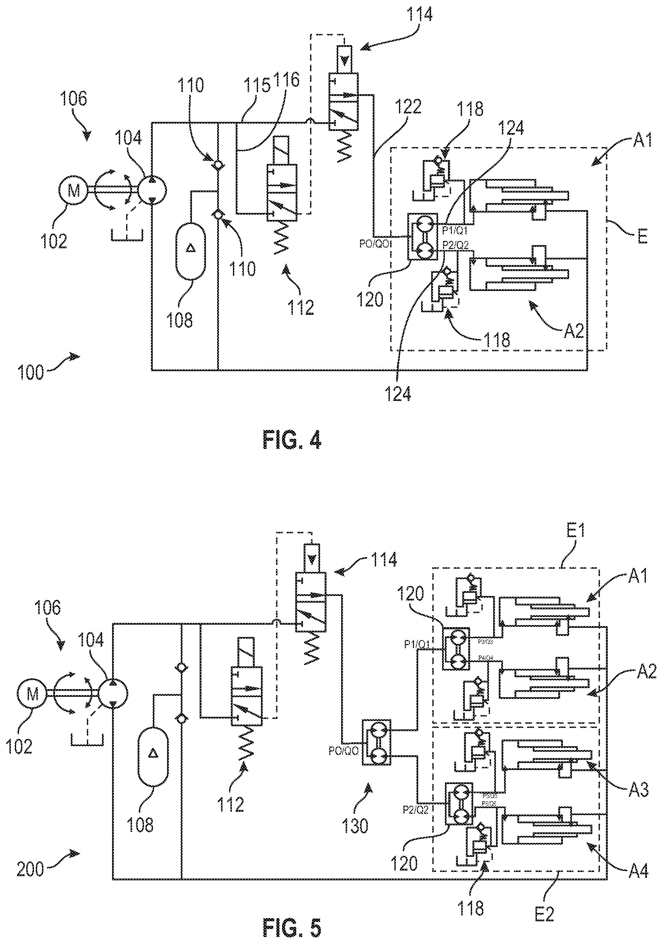

Sur les figures 4, 5 et 6, on utilise les symboles couramment utilisés en matière de circuits hydrauliques.

Les éléments ayant les mêmes fonctions dans les différentes mises en œuvre ont les mêmes références dans les figures.

### DESCRIPTION DES MODES DE RÉALISATION

La présente invention concerne un dispositif d'inversion de poussée pour nacelle de turboréacteur d'aéronef comportant un système d'actionnement électro-hydrostatique. En particulier, l'invention s'applique à tout dispositif d'inversion de poussée comportant au moins un capot mobile entre une position escamotée et une position déployée par rapport à la nacelle, le ou les capots mobiles étant déplacés par un tel système d'actionnement électro-hydrostatique.

L'invention s'applique aussi bien aux dispositifs d'inversion de poussée à grilles ou aux dispositifs d'inversion de poussée à portes.

Les figures 4, 5 et 6 illustrent des modes de réalisation d'un système d'actionnement électro-hydrostatique pour dispositif d'inversion de poussée selon l'invention.

Quel que soit le mode de réalisation illustré, le système d'actionnement comporte un moteur électrique 102 et une pompe à cylindrée fixe 104 formant un ensemble moteur-pompe ou motopompe 106. La pompe 104 est de préférence une pompe à cylindrée fixe bidirectionnelle à pistons axiaux.

Le moteur électrique 102 est un moteur électrique triphasé, du type moteur synchrone à aimants permanents, associé à la pompe hydraulique, c'est-à-dire qu'il est adapté pour convertir la puissance électrique de l'aéronef en puissance mécanique (rotation et couple) pour la pompe à cylindrée fixe 104. Le moteur électrique 102 est contrôlé par une électronique de commande du moteur (MDE) qui se compose de circuits nécessaires pour assurer la commande du moteur électrique EHA et comprend les circuits nécessaires pour s'interfacer avec le réseau électrique de l'aéronef afin de convertir une alimentation triphasée à fréquence variable, par exemple 115 V AC (nominale), en un bus DC. Le bus DC alimente l'onduleur qui est commuté pour contrôler le courant dans les enroulements de phase du moteur électrique.

Alternativement, le moteur électrique peut être un moteur asynchrone et la pompe est une pompe à cylindrée variable. Dans ce cas, au lieu de contrôler la vitesse du moteur électrique, une électronique de commande est configurée pour contrôler l'inclinaison du plateau came d'une telle pompe.

La pompe 104 est capable de fonctionner dans les quatre quadrants, dans les deux sens, moteur et pompe.

Cet ensemble moteur-pompe 106 est configuré pour fournir le débit et la pression en fluide au système. L'association d'un moteur électrique synchrone à aimants permanents et d'une pompe à cylindrée fixe bidirectionnelle à pistons axiaux assure le meilleur rendement et les meilleures performances pour un ensemble motopompe ainsi qu'une grande fiabilité.

Le système d'actionnement comporte en outre un accumulateur de gaz 108 agencé en parallèle de la motopompe et deux clapets anti-retour 110 pour compenser le volume différentiel entre la chambre annulaire et pleine des actionneurs, pour compenser la dilatation thermique du fluide, pour compenser la fuite dynamique et pour garantir la pression minimale d'alimentation de la pompe 104 afin d'éviter la cavitation de la pompe. Alternativement, l'accumulateur de gaz peut être remplacé par une bâche ou réservoir hydraulique associée à une pompe de gavage garantissant une pression amont à la pompe suffisante pour en assurer le bon fonctionnement.

De plus, le système d'actionnement comporte une vanne d'isolement 112 et une vanne de commande 114 connues en soi et traversées par deux conduites hydrauliques 115, 116 provenant de la pompe 104. De telles vannes comportent un distributeur à tiroir contenu dans un bloc hydraulique. Le distributeur de la vanne d'isolement 112 permet l'activation de la vanne de commande 114, par conséquent, il n'a pas besoin de laisser passer beaucoup de débit contrairement au distributeur de la vanne de commande 114 qui laisse passer le débit et la pression afin d'assurer le passage du fluide avec le moins de perte de charge possible. Néanmoins, le distributeur de la vanne d'isolement 112 doit être le plus étanche possible afin d'éviter une activation intempestive du distributeur de la vanne de commande 114. Le distributeur de la vanne d'isolement 112 a de plus petites dimensions que le distributeur de la vanne de commande 114.

Ces vannes d'isolement 112 et de commande 114 agissent comme des dispositifs de sécurité permettant d'empêcher l'actionnement intempestif des actionneurs et donc le déplacement du capot mobile du dispositif d'inversion de poussée, par exemple en dehors de la phase d'atterrissage de l'aéronef, notamment en plein vol. Elles permettent de conformer ainsi le système d'actionnement aux exigences requises dans ce domaine d'application en matière de déploiement intempestif des capots mobiles.

En référence à la figure 4, deux actionneurs hydrauliques A1, A2 du système d'actionnement 100 sont représentés, du type de préférence à engrenages, connus en soi, tels que des vérins dissymétriques dont la grande chambre sert à déployer les volets. Afin d'assurer la consommation d'énergie tout au long de la course de l'actionneur, les deux actionneurs A1, A2 sont de préférence télescopiques, c'est-à-dire adaptés pour limiter le débit une fois la charge diminuée.

Les deux actionneurs A1, A2 sont adaptés et destinés à déplacer un capot mobile d'un dispositif d'inversion de poussée équipant une nacelle d'aéronef par rapport à la nacelle entre une position escamotée ou position de jet direct et une position déployée ou position de jet inversé. Par exemple, ils sont particulièrement adaptés pour faire coulisser un capot d'un inverseur de poussée à grilles.

Dans ce cas, les deux actionneurs A1, A2 sont de préférence chacun fixé à une extrémité du capot.

De préférence, chaque actionneur A1, A2 du dispositif d'actionnement comporte un limiteur de pression 118 agencé sur chaque chambre pleine permettant d'assurer la synchronisation des actionneurs et d'éviter un effet d'amplification de pression en cas de panne de l'un d'eux.

En outre, les actionneurs sont équipés d'un système de verrouillage interne afin d'être conformes aux exigences de sécurité du système d'inverseur de poussée.

En se reportant à la figure 4, le système d'actionnement selon le premier mode de réalisation comporte également un diviseur de débit volumétrique 120 permettant de garantir la synchronisation des actionneurs A1, A2.

Le diviseur de débit volumétrique 120 comporte une entrée raccordée à la motopompe par une conduite d'entrée 122 et au moins deux sorties, chacune raccordée à un actionneur A1, A2 par une conduite de sortie 124. Le diviseur de débit volumétrique 120 est configuré pour recevoir un fluide avec un débit et une pression d'entrée, et pour fournir de manière sensiblement équitable le fluide aux actionneurs avec un débit et une pression de sortie. Autrement dit, il est configuré pour diviser le flux de fluide de manière égale quelle que soit la pression d'entrée. Par « sensiblement équitable », on entend au sens de l'invention que le diviseur de débit volumétrique fournit le fluide aux actionneurs avec une différence de débits en sortie inférieure à 10 %, de préférence inférieure à 5 %, et de préférence encore de manière strictement identique.

De préférence, le diviseur à débit volumétrique est du type à engrenages permettant d'assurer la synchronisation entre les actionneurs de manière très précise. En effet, la précision est telle que la différence de débits en sortie est inférieure à 1%. Ainsi, les diviseurs à débit volumétrique assureront le même débit avec une grande précision à tous les actionneurs. En outre, ils ont l'avantage de ne pas être affectés par les charges sur le capot du dispositif d'inversion et offrent une grande précision.

Le diviseur de débit volumétrique 120 et les deux actionneurs forment un ensemble d'actionnement E.

Ainsi, selon le mode de réalisation illustré sur la figure 4, la pression P0 et le débit Q0 en fluide provenant de la pompe 104 seront divisés en deux par le diviseur de débit volumétrique 120 vers le premier actionneur A1 avec une pression P1 et le débit Q1 et vers le deuxième actionneur A2 avec une pression P2 et le débit Q2. La différence de débit entre Q1 et Q2 est au maximum de 1 %.

De préférence, le diviseur de débit volumétrique 120 est avantageusement équipé d'un limiteur de pression interne afin de garantir que les deux pressions P1, P2 résultantes sont égales.

L'ensemble moteur-pompe est configurée pour fournir une demande de débit et de pression aux actionneurs du système d'actionnement électro-hydrostatique. Cet ensemble permet de réguler la variation de vitesse et de pression grâce à une boucle de régulation contenue dans le bloc moteur. Un tel système d'actionnement électro-hydrostatique peut aussi permettre d'assurer le freinage des actionneurs en vitesse grâce à une résistance de freinage contenue dans l'électronique de commande.

Au début de la course du capot et donc des actionneurs, les charges sont élevées et antagonistes. La motopompe est adaptée pour fournir une pression maximale pour ce début de course. Mais lorsque le ou les capots mobiles commencent à être ouverts, les charges aident le déplacement et la demande de débit est élevée, il est alors nécessaire de réduire ou de contrôler cette demande. Le système d'actionnement électro-hydrostatique permet également de contrôler les charges de fin de course grâce à une boucle de contrôle afin de minimiser l'augmentation de pression au déploiement complet. Le système d'actionnement selon l'invention est capable d'adapter la pression et la demande de débit instantanément.

En se reportant à la figure 5, illustrant un deuxième mode de réalisation d'un système d'actionnement électro-hydrostatique selon l'invention, celui-comporte deux ensembles d'actionnement E1, E2, tels que définis ci-avant. Ainsi, ce système d'actionnement électro-hydrostatique comporte quatre actionneurs A1, A2, A3, A4 et deux diviseurs de débit volumétrique 120 permettant de garantir la synchronisation des actionneurs A1, A2, A3, A4.

De préférence, le dispositif d'inversion de poussée comporte deux capots mobiles et les actionneurs d'un même ensemble d'actionnement sont de préférence fixés à des extrémités opposées d'un même capot. Les actionneurs d'un ensemble d'actionnement sont destinés à déplacer un capot droit tandis que les actionneurs de l'autre ensemble d'actionnement sont destinés à déplacer un capot gauche.

Alternativement, le dispositif d'inversion de poussée ne comporte qu'un capot mobile. Dans ce cas, les actionneurs A1, A2, A3, A4 sont fixés sur le capot de manière à être espacés angulairement de manière régulière, afin de permettre une répartition équilibrée des efforts d'actionnement du capot du dispositif d'inversion de poussée. Avantageusement, deux des actionneurs, par exemple A1 et A4, seront fixés chacun à une extrémité du capot afin d'obtenir la meilleure répartition de charge et de s'affranchir en outre des déformations du capot.

Selon ce deuxième mode de réalisation, le système d'actionnement électro-hydrostatique comporte en outre un autre diviseur de débit volumétrique, ci-après appelé diviseur principal de débit volumétrique 130 raccordant la motopompe à chacun des premier et deuxième ensemble d'actionnement E1, E2.

Le diviseur principal de débit volumétrique 130 est configuré pour fournir équitablement aux premier et deuxième ensembles d'actionnement E1, E2 le fluide reçu de la motopompe.

L'ensemble des diviseurs de débit volumétrique 120, 130 assure la synchronisation des actionneurs.

Selon ce deuxième mode de réalisation, la pression P0 et le débit Q0 provenant de la pompe 104 sont divisés en deux lignes par le diviseur principal de débit volumétrique 130 : l'une pour le premier ensemble d'actionnement E1 avec la pression P1 et un débit Q1 et l'autre pour le deuxième ensemble d'actionnement E2 avec une pression P2 et un débit Q2. La différence de débit Q2-Q1 entre ces deux lignes est dans la plage de +/-1%.

De la même manière, la pression P1 et le débit Q1 sont répartis par le diviseur de débit volumétrique 120 du premier ensemble d'actionnement E1 en une pression P3 et un débit Q3 sur une ligne, pour l'actionneur A1, et sur l'autre ligne en une pression P4 et un débit Q4, pour l'actionneur A2. La différence entre Q3 et Q4 est de 1% maximum en valeur absolue.

De la même manière, la pression P2 et le débit Q2 sont répartis par le diviseur de débit volumétrique 120 du deuxième ensemble d'actionnement E2 en une pression P5 et un débit Q5 sur une ligne, pour l'actionneur A3, et sur l'autre ligne en une pression P6 et un débit Q6, pour l'actionneur A4. La différence entre Q5 et Q6 est de 1% maximum en valeur absolue.

Chaque diviseur de débit volumétrique 120, 130 est de préférence équipé d'un limiteur de pression interne afin de garantir que les deux pressions résultantes à travers un diviseur de débit sont égales.

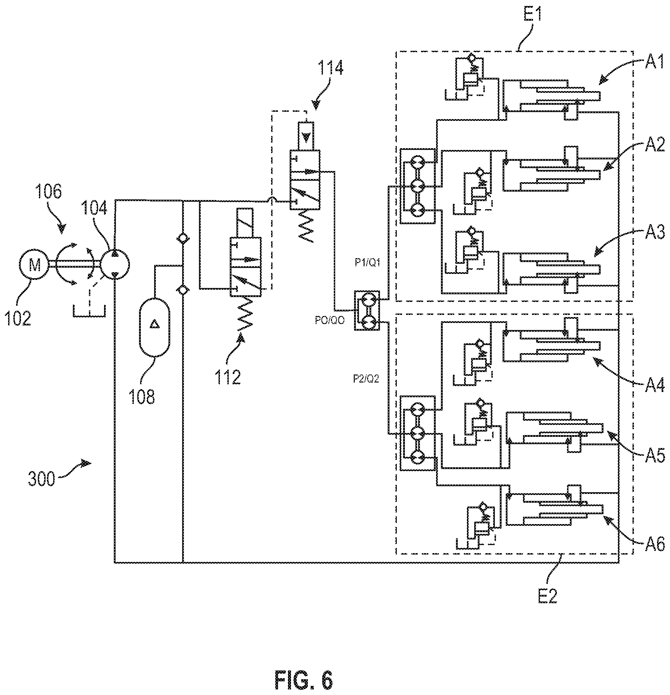

La figure 6 illustre un troisième mode de réalisation d'un système d'actionnement électro-hydrostatique selon l'invention. Celui-ci diffère de celui de la figure 5 en ce que chaque ensemble d'actionnement E1, E2 comporte chacun un triplet d'actionneurs A1, A2, A3 et A4, A5, A6 pour déplacer de préférence deux capots mobiles d'un dispositif d'inversion de poussée. Les actionneurs d'un même triplet d'actionneurs sont destinés à être régulièrement fixés entre deux extrémités opposées d'un même capot mobile, un triplet pour un capot droit et un triplet pour un capot gauche.

Alternativement, le dispositif d'inversion de poussée comporte un unique capot mobile. Dans ce cas, les actionneurs A1, A2, A3, A4, A5, A6 sont fixés sur le capot de manière à être espacés angulairement de manière régulière, afin de permettre une répartition équilibrée des efforts d'actionnement du capot du dispositif d'inversion de poussée.

Le diviseur de débit volumétrique 120 du premier ensemble d'actionnement E1 permet de garantir la synchronisation des actionneurs A1, A2, A3 tandis que le diviseur de débit volumétrique 120 du deuxième ensemble d'actionnement E2 permet de garantir la synchronisation des actionneurs A4, A5, A6.

De la même manière que pour le deuxième mode de réalisation de la figure 5, le diviseur principal de débit volumétrique 130 est configuré pour fournir équitablement aux premier et deuxième ensembles d'actionnement E1, E2 le fluide reçu de la motopompe. L'ensemble des diviseurs de débit volumétrique 120, 130 assure la synchronisation de l'ensemble des actionneurs.

## Revendications

1. Dispositif d'inversion de poussée pour nacelle de turboréacteur d'aéronef comportant au moins un capot mobile entre une position escamotée et une position déployée par rapport à la nacelle et un système d'actionnement électro-hydrostatique, le système électro-hydrostatique comprenant une motopompe (106), et un premier ensemble d'actionnement (E) formé de :
- une série d'au moins deux actionneurs (A1, A2) destinés à être fixés à un capot mobile du dispositif d'inversion de poussée et configurés pour déplacer le ou les capots mobiles entre une position escamotée et une position déployée par rapport à la nacelle ; et
- un diviseur de débit volumétrique (120) ayant une entrée raccordée à la motopompe (106) et au moins deux sorties, chacune raccordée à un actionneur (A1, A2), le diviseur de débit volumétrique (120) étant configuré pour recevoir un fluide et pour fournir de manière sensiblement équitable en débit le fluide aux actionneurs.

2. Dispositif d'inversion de poussée selon la revendication 1, dans lequel le système d'actionnement électro-hydrostatique comporte un deuxième ensemble d'actionnement (E1, E2) identique au premier ensemble d'actionnement et un diviseur principal de débit volumétrique (130) raccordant la motopompe (106) à chacun des premier et deuxième ensembles d'actionnement, le diviseur principal de débit volumétrique étant configuré pour fournir équitablement aux premier et deuxième ensembles d'actionnement le fluide reçu de la motopompe.

3. Dispositif d'inversion de poussée selon la revendication 1 ou 2, dans lequel chaque ensemble d'actionnement (E1, E2) comporte une paire d'actionneurs (A1, A2, A3, A4) et est configuré pour déplacer respectivement un premier et un deuxième capots mobiles du dispositif d'inversion de poussée, les actionneurs d'une même paire d'actionneurs étant destinés à être fixés à des extrémités opposées d'un même capot mobile.

4. Dispositif d'inversion de poussée selon l'une quelconque des revendications 2 à 3, dans lequel le ou les diviseurs de débit volumétrique (120) des ensembles d'actionnement et le diviseur principal de débit volumétrique (130) sont de type à engrenages.

5. Dispositif d'inversion de poussée selon l'une quelconque des revendications précédentes, dans lequel chaque diviseur de débit volumétrique (120) d'un ensemble d'actionnement (E1, E2) comporte un limiteur de pression interne.

6. Dispositif d'inversion de poussée selon l'une quelconque des revendications précédentes, dans lequel la motopompe (106) comporte un moteur électrique synchrone à aimants permanents (102) associé à une pompe à cylindrée fixe bidirectionnelle à pistons axiaux (104).

7. Dispositif d'inversion de poussée selon l'une quelconque des revendications précédentes, dans lequel le système d'actionnement électro-hydrostatique comporte un dispositif de sécurité agencé entre la motopompe et le diviseur de débit volumétrique du premier ensemble d'actionnement, le dispositif de sécurité étant configuré pour empêcher une activation du diviseur de débit volumétrique en dehors de la phase d'atterrissage de l'aéronef, le dispositif de sécurité comportant une vanne d'isolement (112) et une vanne de commande (114).

8. Dispositif d'inversion de poussée selon la revendication 7 lorsqu'elle dépend de la revendication 2, dans lequel le dispositif de sécurité est agencé entre la motopompe (106) et le diviseur principal de débit volumétrique (130), le dispositif de sécurité étant configuré pour empêcher une activation du diviseur principal de débit volumétrique en dehors de la phase d'atterrissage de l'aéronef.

9. Dispositif d'inversion de poussée selon l'une quelconque des revendications précédentes, dans lequel les actionneurs sont des actionneurs télescopiques.

10. Dispositif d'inversion de poussée selon l'une quelconque des revendications précédentes, dans lequel le système d'actionnement électro-hydrostatique comporte des conduites (124) raccordant chacune un actionneur à un diviseur de débit volumétrique et un fusible hydraulique agencé sur chaque conduite.

11. Aéronef comportant un dispositif d'inversion de poussée selon l'une des revendications précédentes.

## Patentansprüche

1. Schubumkehrvorrichtung für eine Turbotriebwerkgondel eines Luftfahrzeugs, umfassend mindestens eine Abdeckung, die in Bezug auf die Gondel zwischen einer eingezogenen Position und einer ausgefahrenen Position beweglich ist, und ein elektrohydrostatisches Betätigungssystem, wobei das elektro-hydrostatische System eine Motorpumpe (106) und eine erste Betätigungsbaugruppe (E) umfasst, gebildet aus:
- einer Reihe von mindestens zwei Betätigungsvorrichtungen (A1, A2), die dazu bestimmt sind, an einer beweglichen Abdeckung der Schubumkehrvorrichtung befestigt zu werden, und konfiguriert sind, um die bewegliche(n) Abdeckung(en) in Bezug auf die Gondel zwischen einer eingezogenen Position und einer ausgefahrenen Position zu verschieben; und
- einem Volumenstromteiler (120), der einen an die Motorpumpe (106) angeschlossenen Eingang und mindestens zwei Ausgänge aufweist, von denen jeder an eine Betätigungsvorrichtung (A1, A2) angeschlossen ist, wobei der Volumenstromteiler (120) zum Aufnehmen eines Fluids und zum Bereitstellen des Fluids auf im Wesentlichen faire Weise an die Betätigungsvorrichtungen konfiguriert ist.

2. Schubumkehrvorrichtung nach Anspruch 1, wobei das elektro-hydrostatische Betätigungssystem eine zweite Betätigungsbaugruppe (E1, E2), die mit der ersten Betätigungsbaugruppe identisch ist, und einen Hauptvolumenstromteiler (130), der die Motorpumpe (106) an jede der ersten und zweiten Betätigungsbaugruppe anschließt, umfasst, wobei der Hauptvolumenstromteiler zum fairen Bereitstellen des von der Motorpumpe aufgenommenen Fluids an die erste und zweite Betätigungsbaugruppe konfiguriert ist.

3. Schubumkehrvorrichtung nach Anspruch 1 oder 2, wobei jede Betätigungsbaugruppe (E1, E2) ein Paar von Betätigungsvorrichtungen (A1, A2, A3, A4) umfasst und konfiguriert ist, um jeweils eine erste und eine zweite bewegliche Abdeckung der Schubumkehrvorrichtung zu verschieben, wobei die Betätigungsvorrichtungen eines gleichen Paars von Betätigungsvorrichtungen dazu bestimmt sind, an entgegengesetzten Enden einer gleichen beweglichen Abdeckung befestigt zu werden.

4. Schubumkehrvorrichtung nach einem der Ansprüche 2 bis 3, wobei der oder die Volumenstromteiler (120) der Betätigungsbaugruppen und der Hauptvolumenstromteiler (130) vom Zahnradtyp sind.

5. Schubumkehrvorrichtung nach einem der vorstehenden Ansprüche, wobei jeder Volumenstromteiler (120) einer Betätigungsbaugruppe (E1, E2) einen internen Druckbegrenzer umfasst.

6. Schubumkehrvorrichtung nach einem der vorstehenden Ansprüche, wobei die Motorpumpe (106) einen elektrischen Synchronmotor mit Permanentmagneten (102) umfasst, der mit einer bidirektionalen Axialkolbenpumpe mit festem Hubraum (104) assoziiert ist.

7. Schubumkehrvorrichtung nach einem der vorstehenden Ansprüche, wobei das elektro-hydrostatische Betätigungssystem eine Sicherheitsvorrichtung umfasst, die zwischen der Motorpumpe und dem Volumenstromteiler der ersten Betätigungsbaugruppe angeordnet ist, wobei die Sicherheitsvorrichtung zum Verhindern einer Aktivierung des Volumenstromteilers außerhalb der Landephase des Luftfahrzeugs konfiguriert ist, wobei die Sicherheitsvorrichtung ein Absperrventil (112) und ein Steuerventil (114) umfasst.

8. Schubumkehrvorrichtung nach Anspruch 7, wenn abhängig von Anspruch 2, wobei die Sicherheitsvorrichtung zwischen der Motorpumpe (106) und dem Hauptvolumenstromteiler (130) angeordnet ist, wobei die Sicherheitsvorrichtung zum Verhindern einer Aktivierung des Hauptvolumenstromteilers außerhalb der Landephase des Luftfahrzeugs konfiguriert ist.

9. Schubumkehrvorrichtung nach einem der vorstehenden Ansprüche, wobei die Betätigungsvorrichtungen teleskopische Betätigungsvorrichtungen sind.

10. Schubumkehrvorrichtung nach einem der vorstehenden Ansprüche, wobei das elektro-hydrostatische Betätigungssystem Leitungen (124), die jeweils eine Betätigungsvorrichtung an einen Volumenstromteiler anschließen, und eine an jeder Leitung angeordnete hydraulische Sicherung umfasst.

11. Luftfahrzeug, umfassend eine Schubumkehrvorrichtung nach einem der vorstehenden Ansprüche.

## Claims

1. A thrust reverser device for an aircraft turbojet engine nacelle comprising at least one cover movable between a retracted position and a deployed position with respect to the nacelle and an electro-hydrostatic actuation system, the electro-hydrostatic system comprising a motor pump (106), and a first actuation assembly (E) formed of:
- a series of at least two actuators (A1, A2) intended to be attached to a movable cover of the thrust reverser device and configured to move the movable cover or covers between a retracted position and a deployed position relative to the nacelle; and
- a volumetric flow divider (120) having an inlet connected to the motor pump (106) and at least two outlets, each connected to an actuator (A1, A2), the volumetric flow divider (120) being configured to receive a fluid and to supply the actuators with a substantially equal flow rate.

2. The reverse thrust device as claimed in claim 1, wherein the electro-hydrostatic actuation system comprises a second actuation assembly (E1, E2) identical to the first actuation assembly and a main volumetric flow divider (130) connecting the motor pump (106) to each of the first and second actuation assemblies, the main volumetric flow divider being configured to equitably supply the first and second actuation assemblies with the fluid received from the motor pump.

3. The thrust reverser device according to claim 1 or 2, wherein each actuation assembly (E1, E2) comprises a pair of actuators (A1, A2, A3, A4) and is configured to move a first and a second movable cover of the thrust reverser device respectively, the actuators of the same pair of actuators being intended to be attached to opposite ends of the same movable cover.

4. The thrust reverser device according to any one of claims 2 to 3, wherein the volumetric flow divider or dividers (120) of the actuation assemblies and the main volumetric flow divider (130) are of the gear type.

5. The thrust reverser device according to any one of the preceding claims, wherein each volumetric flow divider (120) of an actuation assembly (E1, E2) comprises an internal pressure limiter.

6. The thrust reverser device according to any one of the preceding claims, wherein the motor pump (106) comprises a permanent magnet synchronous electric motor (102) associated with an axial piston bidirectional stationary displacement pump (104).

7. The thrust reverser device according to any one of the preceding claims, wherein the electro-hydrostatic actuation system comprises a safety device arranged between the motor pump and the volumetric flow divider of the first actuation assembly, the safety device being configured to prevent an activation of the volumetric flow divider outside the landing phase of the aircraft, the safety device comprising an isolating valve (112) and a control valve (114).

8. The thrust reverser device according to claim 7 when dependent on claim 2, wherein the safety device is arranged between the motor pump (106) and the main volumetric flow divider (130), the safety device being configured to prevent an activation of the main volumetric flow divider outside the landing phase of the aircraft.

9. The thrust reverser device according to any one of the preceding claims, wherein the actuators are telescopic actuators.

10. The thrust reverser device according to any one of the preceding claims, wherein the electro-hydrostatic actuation system comprises conduits (124) each connecting an actuator to a volumetric flow divider and a hydraulic fuse arranged on each conduit.

11. An aircraft comprising a thrust reverser device according to one of the preceding claims.
